# EUROPEAN PATENT APPLICATION

(11) **EP 4 477 086 A1**
(43) Date of publication of application: **18.12.2024**
(21) Application number: 23752505.0
(22) Date of filing: 07.02.2023
(51) Int. Cl.: A23D 9/007, A23L 33/105, A23L 33/115

(54) **CAROTENOID-ENRICHED EXTRA VIRGIN OLIVE OIL, METHOD FOR OBTAINING SAME AND FUNCTIONAL FOOD COMPRISING SAME**

(30) Priority: 08.02.2022 ES 202230093
(71) Applicant: Oleopalma, S.A.T., 14700 Palma del Rio Córdoba (ES); Universidad de Sevilla, 41013 Sevilla (ES)
(72) Inventor: FERRARI FRANCO, Juan Jesus, 14700 PALMA DEL RIO (Córdoba) (ES); BOHORQUEZ LOPEZ, Rafael, 14700 PALMA DEL RIO (Córdoba) (ES); MELÉNDEZ MARTÍNEZ, Antonio Jesús, 41013 SEVILLA (ES); BENÍTEZ GONZÁLEZ, Ana, 41013 SEVILLA (ES)
(74) Representative: Herrero & Asociados, S.L.
(86) International application number: PCT/ES2023/070068
(87) International publication number: WO 2023/152414

(57) **Abstract**

The present invention relates to an extra virgin olive oil enriched in carotenoids from fruit and/or vegetable pulp, as well as the procedure for obtaining the carotenoid-enriched olive oil and the functional food comprising the oil defined in the invention.

## Description

The present invention relates to an extra virgin olive oil enriched in carotenoids. The present invention also relates to the process for obtaining the enriched oil.

### Background to the invention

The nutritional quality of food is an issue of increasing concern to consumers as well as to health-related bodies and agencies. This is because there is a proven relationship between the consumption of plant foods and their beneficial effects, especially in the prevention of degenerative diseases. Organisations such as the FAO and the WHO, at international level, or the AESAN at national level, among many others, have launched programmes to encourage greater consumption of fruit and vegetables, as low consumption has been identified as one of the 10 main causes of death in humans. This is why the production of safe, healthy, quality foods that can compete in a global market is increasingly promoted, as well as the study of the influence of diet on disease prevention and ageing. The aim is to improve the health and wellbeing of the population, as well as to promote healthier ageing and reduce the costs of dietrelated diseases to national health systems.

Carotenoids are highly versatile isoprenoid compounds biosynthesised by photosynthetic organisms and some non-photosynthetic prokaryotes and fungi. They are widely known in the context of food science, nutrition and health for their role as natural dyes and some have activity as Vitamin A precursors. There is ample evidence that carotenoids and their derivatives are beneficial to human health. Studies of various kinds indicate that they may be beneficial for improving immunity, reducing the risk of various diseases (cardiovascular, eye, skin, cancers, among others), contributing to cognitive and metabolic benefits, and the development of the foetus.

The problem with carotenoids is their degradation, which leads to a change in colour and a decrease in nutritional value. Carotenoids are easily oxidised as they are unsaturated compounds. They are also affected by temperature, light or pH.

The instability of carotenoids is due to the fact that they are highly unsaturated compounds, degrading mainly due to oxidative processes. Other factors such as temperature, light or pH can also produce important qualitative changes in these compounds due to isomerisation reactions.

Carotenoids oxidise more quickly when they are extracted from the fruit or purified, so attempts have been made to find ways to stabilise them, for example in patent US6200601, which describes capsules containing antioxidants including at least one carotenoid.

In the paper by Flori Lorenzo et al. entitled "Development of Fortified Citrus Olive Oils: From Their Production to Their Nutraceutical Properties on the Cardiovascular System" published in Nutrients, 2020, vol. 12, they describe an olive oil enriched in carotenoids from citrus peel. To obtain the peel part, they peel it manually in a thickness of 2mm and put it in contact with CO₂ to cryonise it because it is necessary to avoid oxidation.

The paper by Bendini Alessandra et al entitled "Olive oil enriched in lycopene from tomato byproduct through a co-milling process" published in the International Journal of Food Sciences and Nutrition, 2015, vol. 66, pages 371-377, describes an olive oil enriched with lycopene from tomato skin and seeds. It does not use the pulp to obtain lycopene. The process of extracting the lycopenes with the oil comprises a step of crushing the olives with the tomato by-products and subsequent shaking.

Finally, patent application ES2241503 describes formulations enriched in lycopene, when the source of lycopene is tomato, it is necessary to dry the tomato, otherwise the process does not achieve the extraction of lycopene.

It is therefore of great interest to develop products that stabilise carotenoids until they are ready for consumption.

### Description of the invention

The present invention describes an extra virgin olive oil enriched in carotenoids from fruit pulp and/or vegetables , other than olives, in order to develop new products with pleasant sensory properties and added value by containing more carotenoids than extra virgin olive oil and because carotenoids are more stable against oxidation.

It has been surprisingly found that the stability of the added carotenoids in extra virgin olive oil is improved if the origin is the fruit pulp and not the skin or seeds. In addition, the colour, flavour and carotenoid content of the oil is improved.

It is known that oxidation processes in fruit carotenoids are more pronounced when cellular integrity is lost, so that, in crushed plant foods, the loss of cellular compartmentalisation brings substances into contact that can structurally modify or even destroy carotenoids.

Moreover, in the case of citrus fruits, if the carotenoids come from the peel, they can damage the oil with bitter flavours. Citrus peel has two zones, epicarp and mesocarp. The mesocarp has bitter compounds which, when transferred to the oil, give undesirable organoleptic characteristics.

Likewise, the skin of some fruits and vegetables is harder and more difficult to break down than the pulp, which hinders the transfer of the compounds found in its cells. On the other hand, the skin, being the outermost structure, is more susceptible than the pulp to contain materials that pose a hygienic risk to consumers, such as pesticide and agrochemical residues, air pollutants, pathogens and compounds that could be released from them, etc.

Therefore, the present invention overcomes all the problems of obtaining carotenoids from fruit and/or vegetable peel.

In the present invention, a carotenoid-enriched extra virgin olive oil has been developed, comprising carotenoids from fruit and/or vegetable pulp or other non-olive products in a concentration of between 30% and 700% by weight of the carotenoids in olive oil.

The oil of the invention enriched as shown in the examples of the invention shows an index of peroxides that remains within the limits accepted by the Commercial Standard applicable to olive oil to be considered as Extra Virgin (IP <20 meqO₂ active/Kg oil) expressed as % oleic acid).

Likewise, the acidity parameter remains within the limits accepted by the Commercial Standard applicable to olive oil to be considered as Extra Virgin (acidity <0.8 expressed as % oleic acid).

It is important to note that the properties of the extra virgin oil are maintained despite the addition of pulp, as a high carotenoid content is achieved without detracting from the properties of the oil.

In the process of the invention, fruit pulp and/or vegetable pulp with a high carotenoid content is added to the olive paste. Pulp is understood to be the inner, fleshy part of the fruit or vegetable. After adding the pulp, the usual procedure for obtaining extra virgin olive oil is followed.

In a second aspect of the invention relates to the process of obtaining said carotenoid-enriched olive oil comprising:
a) grinding and beating olives to obtain an olive paste;
b) add to the olive paste obtained in step (a) fruit pulp and/or vegetable pulp with a high carotenoid content in a concentration of between 10% and 30% by weight of pulp in relation to the total weight, olive paste and weight of fruit pulp added;
c) separation of the liquid phase from the solid phase by filtration and/or pressure extraction;
d) decantation and/or centrifugation of the liquid phase obtained in step (c).

The invention also relates to the product obtained by the procedure described above.

A last aspect of the invention relates to a product comprising the oil of the first aspect of the invention.

### Brief description of the drawings

Figure 1 shows the initial and final carotenoid concentration in samples spiked with mandarin pulp.
Figure 2 shows the initial and final carotenoid concentration in samples spiked with passion fruit pulp.
Figure 3 shows the evolution of acidity in samples fortified with mandarin pulp.
Figure 4 shows the evolution of acidity in samples fortified with passion fruit pulp.
Figure 5 shows the evolution of the peroxides index in samples spiked with mandarin pulp.
Figure 6 shows the evolution of the peroxides index in samples spiked with passion fruit pulp.

### Description of a preferred embodiment

As stated above, the first aspect of the invention concerns an extra virgin olive oil enriched in carotenoids coming from the pulp of fruits and/or vegetables other than olives in a concentration comprised between 30% and 700% by weight with respect to the carotenoids comprised in the olive oil. Preferably in a concentration comprised between 50% and 500% by weight with respect to the carotenoids comprised in the olive oil. More preferably between 100% and 200%.

Preferably the carotenoids are: lycopene, β-carotene, lutein, zeaxanthin, β-cryptoxanthin, α-carotene, β-carotene, lycopene, neurosporene, ζ-carotene, zeinoxanthin, α-cryptoxanthin, δ-carotene, γ-carotene, phytoene and/or phytofluene.

Preferably the fruit is selected from: passion fruit, avocado, mango, pineapple, kiwi, peach, orange, lemon, strawberry, tangerine.

The fruit in particular is mandarin. The mandarin is a citrus fruit whose main carotenoid is β-cryptoxanthin, it also has other carotenoids in lower concentrations, including phytoene and phytofluene.

The fruit in particular is passion fruit. Passion fruit is a tropical fruit with high levels of β-carotene and β-cryptoxanthin as well as lutein and zeaxanthin and to a lesser extent phytoene and phytofluene.

In a second aspect of the invention relates to the process of obtaining said carotenoid-enriched olive oil comprising:
a) grinding and beating olives to obtain an olive paste;
b) add to the olive paste obtained in step (a) fruit and/or vegetable pulp containing carotenoids, in a concentration of between 10% and 30% by weight of pulp in relation to the total weight, olive paste and weight of fruit and/or vegetable pulp added;
c) separation of the liquid phase from the solid phase by filtration and/or pressure extraction;
d) decantation and/or centrifugation of the liquid phase obtained in step (c).

Preferably the fruit is selected from: passion fruit, avocado, mango, pineapple, kiwi, peach, orange, lemon, strawberry, mandarin. Particularly mandarin and/or passion fruit.

Preferably the process further comprises a step prior to step b) of pasteurisation or sterilisation of the fruit and/or vegetable pulp. Preferably the process comprises a step prior to step b) of freezing the fruit and/or vegetable pulp. These stages benefit the transfer of the carotenoids to the oil.

Preferably after step d) there is a storage step in a period between 1 month and 60 months, more preferably between 12 and 24 months.

In particular the product comprising the enriched oil of the invention is selected among: functional food, nutraceutical, cosmetic, nutricosmetic.

The term functional food can be defined as a food that beneficially affects one or more functions in the body beyond the nutritional effects consumed as part of a normal dietary pattern.

### EXAMPLES

The following examples are for illustrative purposes only and are not to be construed as limiting the invention.

### Example 1

As part of a process to obtain extra virgin olive oil, 10% pasteurised mandarin pulp was added to the olive paste. The same was done with 10% pasteurised passion fruit pulp. In both cases, after following the usual procedure for obtaining extra virgin olive oil, enriched virgin olive oil was obtained.

The evolution of the oils was monitored at 0 (arrival of the sample at the laboratory), 1, 2, 3, 6, 9, 12, 15, 18 and 24 months.

During all this time, the samples were kept bottled, sealed and protected from light to avoid undesirable oxidation. At each monitoring time, a new bottle of oil was opened.

The quantification of carotenoid concentration was carried out spectrophotometrically in an

Agilent Cary 8454 spectrophotometer (Agilent, Waldbronn, Germany) according to Mosquera et al. (1991).

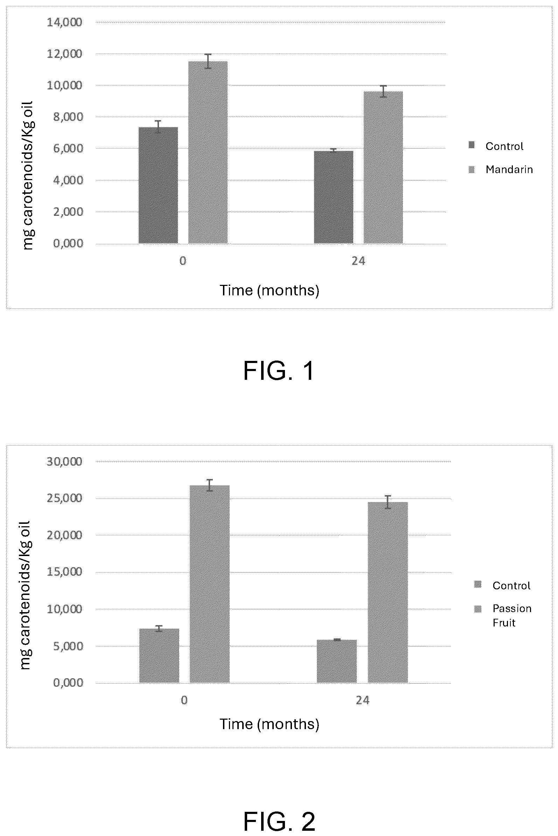

Figure 1 shows the concentration of carotenoids in the control sample and the mandarin-enriched oil at 24 months. In the control sample it was 79% of the initial concentration, while the concentration of the mandarin-enriched sample was 84% of the initial concentration.

Figure 2 shows the concentration of carotenoids in the control sample and the passion fruit enriched oil after 24 months. In the case of the passion fruit enriched samples, their carotenoid concentration was significantly higher than the concentration of the control sample during the 24 months of storage. The concentration of the passion fruit fortified sample was 4 times higher than that of the control sample. After 24 months the samples suffered a degradation of the carotenoids, the concentration being 79% of the initial concentration in the case of the control sample, while in the case of the enriched sample it was 91% of the initial concentration.

Therefore, it was proven two relevant things that the carotenoids in the added fruit pulp, despite the extraction and/or centrifugation process, which otherwise would have degraded in the oil, are stabilised and degraded very slowly and therefore the carotenoid content increases compared to the control oil, and that the carotenoids as a whole are more stable compared to the control oil.

The evaluation of acidity was carried out according to the UNE 55.011 Standard and the evaluation of the peroxide index according to the UNE 55.023 Standard.

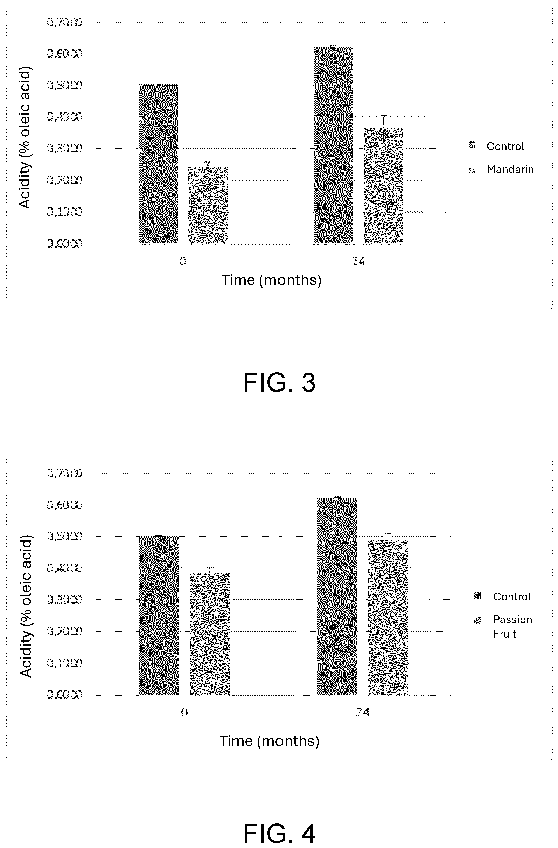

Figures 3 and 4 show that all the samples have an acidity value of less than 0.8 (% oleic acid), which is the limit value for designating an olive oil as "extra virgin". Although there are significant differences in the acidity of the control sample and the enriched samples, in the case of the sample enriched with passion fruit pulp, the evolution of acidity does not show significant differences over the 24 months of storage.

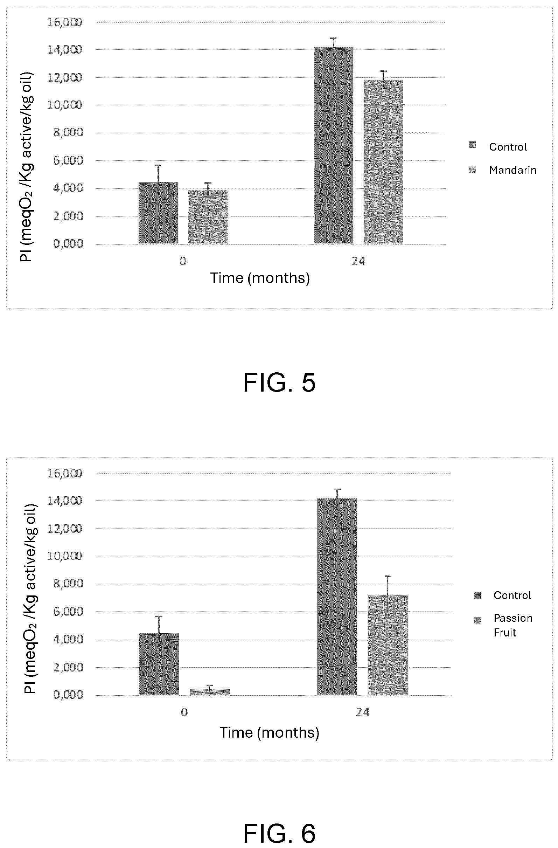

As shown in Figure 5 and Figure 6, after 24 months, the peroxides index of both samples has been increasing with storage, being 14.2 and 7.2 meqO₂ /Kg oil respectively at the end of the test. Both samples had a PI <20 as required by the Commercial Standard applicable to designate an oil as "Extra Virgin".

The Rancimat is a method for measuring the oxidative stability of oils and fats under accelerated conditions, based on the induction of oxidation of the sample by exposure to high temperatures and air flow. In this way, it is possible to estimate the induction time or oxidative stability time, which is the moment from which the sample has exceeded the time in which it remains stable, and is therefore indicative of a loss of quality and useful life of the sample. These analyses were carried out at the institute de la Grasa in Seville.

The trial was carried out on oil enriched with passion fruit.

**Table 1. Results of the accelerated oxidation test using the Rancimat system.**

| Fruit | % Pulp | Hours |
|---|---|---|
| Control | 0 | 17.3 |
| Passion fruit | 10 | 21.8 |

The oxidative stability measured by the Rancimat method of the samples fortified with passion fruit pulp showed a much longer stability time than the control sample (4.5 hours).

## Claims

1. An extra virgin olive oil enriched in carotenoids **characterised in that** it contains carotenoids from fruit and/or vegetable pulp other than olives in a concentration of between 30% and 700% by weight of the carotenoids contained in olive oil.

2. The extra virgin olive oil according to claim 1 **characterised in that** the carotenoids are selected from: lycopene, lutein, zeaxanthin, β-cryptoxanthin, α-carotene, β-carotene, lycopene, phytoene and/or phytofluene.

3. The extra virgin olive oil according to any of claims 1 to 2 **characterised in that** the fruit is selected from: passion fruit, avocado, mango, pineapple, kiwi, peach, orange, lemon, strawberry, mandarin.

4. The extra virgin olive oil according to claim 1, **characterised in that** the fruit is mandarin and/or passion fruit.

5. Procedure for obtaining said olive oil enriched in carotenoids, comprising:
a) grinding and beating olives to obtain an olive paste;
b) add to the olive paste obtained in step (a) fruit and/or vegetable pulp containing carotenoids, in a concentration of between 10% and 30% by weight of pulp in relation to the total weight, olive paste and weight of fruit pulp added;
c) separation of the liquid phase from the solid phase by filtration and/or pressure extraction;
d) decantation and/or centrifugation of the liquid phase obtained in step (c).

6. Process according to claim 5 **characterised in that** the fruit is selected from: passion fruit, avocado, mango, pineapple, kiwi, peach, orange, lemon, strawberry, mandarin.

7. Process according to any one of claims 5 to 6, **characterised in that** the process further comprises a step prior to step b) of pasteurisation or sterilisation of the fruit and/or vegetable pulp.

8. Process according to any one of claims 5 to 7, **characterised in that** the process comprises a step prior to step b) of freezing the fruit and/or vegetable pulp.

9. Functional food comprising the oil defined in claims 1 to 4.
